(19) Europäisches Patentamt
European Patent Office
Office européen des brevets

(11) **EP 4 001 337 A1**

(12) **EUROPÄISCHE PATENTANMELDUNG**

(43) Veröffentlichungstag:
**25.05.2022  Patentblatt 2022/21**

(21) Anmeldenummer: **20207610.5**

(22) Anmeldetag: **13.11.2020**

(51) Internationale Patentklassifikation (IPC):
*C08G 18/48* (2006.01)      *C08G 18/76* (2006.01)

(52) Gemeinsame Patentklassifikation (CPC):
**C08G 18/7621; C08G 18/4887;** C08G 2110/0058

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR VERMINDERUNG VON AMINSPUREN IN POLYURETHANSCHAUMSTOFFEN**

(57)    Die vorliegende Erfindung betrifft ein Verfahren zur Herstellung von Polyurethanen, wobei die Komponenten

**A** enthaltend

**A1** Verbindungen mit gegenüber Isocyanaten reaktionsfähigen Wasserstoffatomen,

**A2** Treibmittel

und gegebenenfalls

**A3** Hilfs- und Zusatzstoffe wie

a) Katalysatoren,

b) oberflächenaktive Zusatzstoffe,

c) Pigmente und/oder Flammschutzmittel

und

**B** Di- und/oder Polyisocyanaten,

miteinander umgesetzt werden, dadurch gekennzeichnet, dass eine Verbindung **A1.1** enthaltend ist, die von Alkylenoxid und einer $\alpha,\beta$-ungesättigten Carbonsäure und/oder einem $\alpha,\beta$-ungesättigten Carbonsäurederivat abgeleitete Baueinheiten aufweist.

Weiter betrifft die vorliegende Erfindung die aus diesem Verfahren erhältlichen Polyurethane, sowie den Einsatz solcher Polyurethane beispielsweise im Innenraum von Automobilen.

EP 4 001 337 A1

**Beschreibung**

Die vorliegende Erfindung betrifft ein Verfahren zur Herstellung von Polyurethanschaumstoffen unter Verwendung von emissionsreduzierenden Verbindungen, die erhaltenen Polyurethanschaumstoffe selber und die Verwendung der emissionsvermindernden Verbindungen.

Bei der Herstellung von Polyurethanschaumstoffen entstehen Verbindungen als Nebenprodukte die aus den Polyurethanschaumstoffen emittieren können. Beispiele hierfür sind die Bildung von aromatischen Aminen wie z.B. Toluyldiamin (TDA) und Methylendiphenyldiamin (MDA) oder von Aldehyden wie z.B. Formaldehyd oder Acetaldehyd. Auf Grund der gesundheitsbedenklichen Eigenschaften einiger dieser Verbindungen sind Additive notwendig, um die Bildung oder Emission von Spuren dieser Verbindungen zu reduzieren.

In DE 199 19 826 A1 werden zur Verminderung der Spuren aromatischer Amine bei der Herstellung von Polyurethanschaumstoffen $\alpha,\beta$-ungesättigte Carbonsäuren, $\alpha,\beta$-ungesättigte Carbonsäurederivate, $\alpha,\beta$-ungesättigte Ketone und/oder $\alpha,\beta$-ungesättigte Aldehyde offenbart, wie beispielsweise Hydroxyethylacrylat.

In WO 2013/087582 werden Polyetherestercarbonatpolyole offenbart, die durch Copolymerisation von Propylenoxid, $CO_2$ und Maleinsäureanhydrid, einem $\alpha,\beta$-ungesättigten Carbonsäurederivat, hergestellt werden. Es werden keine Polyurethanschaumstoffe und auch keine Verminderung des Gehaltes oder der Emissionen von aromatischen Aminen in Polyurethanschaumstoffen offenbart.

Die Aufgabenstellung der vorliegenden Erfindung ist die Bereitstellung eines Verfahrens zur Herstellung von Polyurethanschaumstoffen mit vermindertem Gehalt an unerwünschten Spurenstoffen, insbesondere von aromatischen Aminen. In einer besonderen Ausführungsform stellt die Erfindung gleichzeitig einen Beitrag zum Klimaschutz durch die chemische Bindung von $CO_2$ bereit.

Gegenstand der vorliegenden Erfindung ist ein Verfahren zur Herstellung von Polyurethanschaumstoffen, wobei die Komponenten

　**A** enthaltend

　　**A1** Verbindungen mit gegenüber Isocyanaten reaktionsfähigen Wasserstoffatomen,
　　**A2** Treibmittel
　　und gegebenenfalls
　　**A3** Hilfs- und Zusatzstoffe wie

　　　a) Katalysatoren,
　　　b) oberflächenaktive Zusatzstoffe,
　　　c) Pigmente und/oder Flammschutzmittel

　und
　**B** Di- und/oder Polyisocyanaten,

miteinander umgesetzt werden, dadurch gekennzeichnet, dass eine Verbindung **A1.1** enthaltend ist, die von Alkylenoxid und einer $\alpha,\beta$-ungesättigten Carbonsäure und/oder einem $\alpha,\beta$-ungesättigten Carbonsäurederivat abgeleitete Baueinheiten aufweist.

Gegenstand der vorliegenden Erfindung sind auch die nach dem beschriebenen Verfahren erhältlichen Polyurethanschaumstoffe und die Verwendung der Verbindung **A1.1** zur Verminderung des Gehaltes von emittierbaren Spurenstoffen, insbesondere von aromatischen Aminen oder Aldehyden.

**Komponente A1**

Als Verbindungen mit gegenüber Isocyanat reaktionsfähigen Wasserstoffatomen können beispielsweise Polyole ausgewählt aus der Gruppe bestehend aus Polyetherpolyolen, Polyesterpolyolen, Polyetheresterpolyolen, Polycarbonatpolyolen und Polyether-Polycarbonatpolyolen eingesetzt werden. Bevorzugt sind Polyesterpolyole und/oder Polyetherpolyole. Die Verbindungen der Komponente **A1** können eine Amin- und/oder Hydroxylzahl zwischen 15 bis 4000 mg KOH/g und eine Funktionalität von 1 bis 8 aufweisen. Vorzugsweise weisen die Verbindungen der Komponente **A1** ein zahlenmittleres Molekulargewicht von 2000 g/mol bis 15000 g/mol, insbesondere 3000 g/mol bis 12000 g/mol und besonders bevorzugt 3500 g/mol bis 6500 g/mol auf. Werden mehr als nur eine Verbindung der Komponente **A1** verwendet, kann die Mischung aus Verbindungen der Komponente **A1** bevorzugt eine Hydroxylzahl zwischen 20 bis 200 mg KOH/g, insbesondere 25 bis 100 mg KOH/g aufweisen.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw.

gegenüber Polyolen reaktiven Funktionen im Molekül).

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Verwendbare Polyetheresterpolyole sind solche Verbindungen, die Ethergruppen, Estergruppen und OH-Gruppen enthalten. Vorzugsweise werden organische Dicarbonsäuren mit bis zu 12 Kohlenstoffatomen zur Herstellung der Polyetheresterpolyole eingesetzt, bevorzugt aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Ethylenglykol, Propylenglykol, 1,3-Butandiol, 1,4-Butandiol, 1,5-Pentendiol, 1,5-Pentandiol, 1,6-Hexandiol, 1,7-Heptandiol, 1,8-Octandiol, 1,10-Decandiol, 2-Methylpropan-1,3-diol, Neopentylglykol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Diethylenglykol, Dipropylenglykol, Glycerin, Trimethylolpropan, di- und trifunktionelle Polyetherpolyole. Die Polyetherpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/mol. Auch Startermoleküle mit von OH verschiedenen Funktionalitäten können alleine oder in Mischung eingesetzt werden.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden.

Erfindungsgemäß enthält die Komponente **A1** mindestens eine Verbindung **A1.1,** die von Alkylenoxid und einer $\alpha,\beta$-ungesättigten Carbonsäure und/oder einem $\alpha,\beta$-ungesättigten Carbonsäurederivat abgeleitete Baueinheiten enthält. Geeignete Alkylenoxide zum Einbau der von Alkylenoxid abgeleiteten Baueinheiten sind beispielsweise Tetrahydrofuran, Ethylenoxid, Propylenoxid, 1,2- bzw. 2,3-Butylenoxid, Styroloxid, vorzugsweise Ethylenoxid und Propylenoxid. Besonders bevorzugt sind Copolymere des Propylenoxids mit Ethylenoxid. Die Alkylenoxide können einzeln, alternierend nacheinander oder als Mischungen verwendet werden. Die Alkylenoxide können ebenfalls in Kombination mit $CO_2$ umgesetzt werden.

Für den Einbau der von $\alpha,\beta$-ungesättigten Carbonsäure und/oder $\alpha,\beta$-ungesättigten Carbonsäurederivat abgeleiteten Baueinheiten werden entweder cyclische Anhydride oder Lactone von $\alpha,\beta$-ungesättigten Carbonsäuren mit Alkylenoxid und gegebenenfalls $CO_2$ copolymerisiert oder die entsprechenden $\alpha,\beta$-ungesättigten Carbonsäuren werden mit Alkylenoxiden umgesetzt.

Bevorzugt handelt es sich bei der Verbindung **A1.1** um ungesättigte Polyetheresterpolyole oder Polyetherestercarbonatpolyole. Bevorzugt werden als $\alpha,\beta$-ungesättigte Carbonsäurederivate Maleinsäureanhydrid und Itaconsäureanhydrid eingesetzt. Besonders bevorzugt weisen die Verbindungen eine OH-Zahl gemäß DIN 53240-1 in der Fassung von Juni 2013 von 20 bis < 120 mg KOH/g auf.

Es können zusätzlich zum Alkylenoxid, einer $\alpha,\beta$-ungesättigten Carbonsäure und/oder einem $\alpha,\beta$-ungesättigten Carbonsäurederivat noch weitere Monomere zur Herstellung der Verbindung **A1.1** eingesetzt werden, beispielsweise Lactone wie Valerolacton, Angelicalacton, Decalacton und Caprolacton.

Die Verbindung **A1.1** kann auch in Form eines Präpolymers vorliegen. Die Herstellung des Präpolymers kann im Prinzip auf jede dem Fachmann bekannte Weise erfolgen. In vorteilhafter Ausgestaltung wird diese durch Umsetzung von zumindest einer Verbindung **A1.1** mit einem Überschuss an Di- und/oder Polyisocyanat **B**, gegebenenfalls gefolgt von teilweisem Abdestillieren der nicht reagierten Verbindung **A1.1** bis zum gewünschten Gehalt an freiem Isocyanat, hergestellt. Die Umsetzung der Komponenten **A1.1** und **B** kann in Gegenwart einer die Präpolymerisierung katalysierenden Katalysatorkomponente ("Präpolymerisierungskatalysator") erfolgen, bevorzugt erfolgt die Umsetzung jedoch nicht in Gegenwart eines Präpolymerisierungskatalysators bzw. es sind höchstens technisch unvermeidbare Spuren eines Präpolymerisierungskatalysators anwesend.

In einer bevorzugten Ausführungsform wird die Verbindung **A1.1** durch Anlagerung von Alkylenoxid und Maleinsäure und/oder Maleinsäureanhydrid und gegebenenfalls Kohlenstoffdioxid an ein Startermolekül in Anwesenheit eines Doppelmetallcyanid-Katalysators (DMC-Katalysator) hergestellt.

Bevorzugt wird die Verbindung **A1.1.** in einem Anteil von 0,5 bis 60 Gew.-Teile (bezogen auf die Summe der Gew.-Teile aller Komponenten **A** = 100 Gew.-Teile), besonders bevorzugt von 0,8 bis 22 Gew.-Tle. eingesetzt.

Die Polyesterpolyole der Komponente **A1** können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z. B. Di-, Tri- oder sogar Tetracarbonsäuren oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Tetrachlorphthalsäure, Itaconsäure, Malonsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Milchsäure, Äpfelsäure, Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliummethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt sind Copolymere des Propylenoxids mit Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Paraformaldehyd, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Als Verbindungen mit gegenüber Isocyanaten reaktionsfähigen Wasserstoffatomen können auch Polymerpolyole, PHD-Polyole und PIPA-Polyole in Komponente **A1** eingesetzt werden. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyhydrazodicarbonamid)-Polyole werden beispielsweise hergestellt durch in situ Polymerisation eines Isocyanats oder einer Isocyanat-Mischung mit einem Diamin und/oder Hydrazin (bzw. Hydrazinhydrat) in einem Polyol, bevorzugt einem Polyetherpolyol. Bevorzugt wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazinhydrat in einem Polyetherpolyol hergestellt durch Alkoxylierung eines trifunktionellen Starters (wie beispielsweise Glycerin und/oder Trimethylolpropan). Bei PIPA-Polyolen handelt es sich um durch Polyisocyanat-Polyaddition mit Alkanolaminen-modifizierte Polyetherpolyole, wobei das Polyetherpolyol bevorzugt eine Funktionalität von 2,5 bis 4,0 und eine Hydroxylzahl von 3 mg KOH/g bis 112 mg KOH/g (Molekulargewicht 500 g/mol bis 18000 g/mol) aufweist.

Es können auch Isocyanat-reaktive Substanzen mit zellöffnender Wirkung eingesetzt werden, wie beispielsweise Copolymere aus Ethylenoxid und Propylenoxid mit einem Überschuss an Ethylenoxid oder aromatischen Diaminen wie Diethyltoluendiamin.

Neben den oben beschriebenen Isocyanat-reaktiven Verbindungen können in der Komponente **A1** beispielsweise Graft-Polyole, Polyamine, Polyaminoalkohole und Polythiole enthalten sein. Die beschriebenen Isocyanat-reaktiven Komponenten umfassen auch solche Verbindungen mit gemischten Funktionalitäten.

Für die Herstellung von Polyurethanschaumstoffen im Kaltschaumverfahren werden bevorzugt mindestens zwei Hydroxylgruppen aufweisenden Polyether mit einer OH-Zahl von 20 bis 50 mg KOH/g eingesetzt, wobei die OH-Gruppen zu mindestens 80 Mol-% aus primärem OH-Gruppen bestehen (Bestimmung mittels ¹H-NMR (z.B. Bruker DPX 400, Deuterochloroform)). Besonders bevorzugt beträgt die OH-Zahl 25 bis 40 mg KOH/g, ganz besonders bevorzugt 25 bis 35 mg KOH/g.

Gegebenenfalls werden zusätzlich in der Komponente **A1** Verbindungen mit mindestens zwei gegenüber Isocyanaten reaktionsfähigen Wasserstoffatomen und einer OH-Zahl von 280 bis 4000 mg KOH/g, bevorzugt 400 bis 3000 mg KOH/g, besonders bevorzugt 1000 bis 2000 mg KOH/g eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können Ethanolamin, Diethanolamin, Triethanolamin, Sorbit und/oder Glycerin eingesetzt werden.

Die Komponente **A1** kann aus einer oder mehreren der oben genannten Isocyanat-reaktiven Komponenten bestehen, bevorzugt enthält die Komponente **A1** mindestens zwei Hydroxylgruppen aufweisenden Polyether, gegebenenfalls in Mischung mit mindestens zwei Hydroxylgruppen aufweisenden Polyestern.

In einer bevorzugten Ausführungsform enthält die Komponente **A1**:

**A1.1** gegenüber Isocyanaten reaktionsfähige Wasserstoffatome aufweisende Verbindungen die von Alkylenoxid und einer α,β-ungesättigten Carbonsäure und/oder einem α,β-ungesättigten Carbonsäurderivat, bevorzugt von Maleinsäure, abgeleitete Baueinheiten enthalten, bevorzugt handelt es sich um Polyetheresterpolyole und/oder Polyetherestercarbonatpolyole,

A1.2 gegenüber Isocyanaten reaktionsfähige Wasserstoffatome aufweisende Verbindungen mit einer NH-Zahl gemäß DIN 53176 in der Fassung von November 2002 und/oder OH-Zahl gemäß DIN 53240-1 in der Fassung von Juni 2013 von 15 bis < 120 mg KOH/g, gegebenenfalls

A1.3 gegenüber Isocyanaten reaktionsfähige Wasserstoffatome aufweisende Verbindungen mit einer NH- Zahl gemäß DIN 53176 in der Fassung von November 2002 und/oder OH-Zahl gemäß DIN 53240-1 in der Fassung von Juni 2013 von 120 bis 600 mg KOH/g,
und gegebenenfalls

**A1.4** gegenüber Isocyanaten reaktionsfähigen Wasserstoffatomen aufweisenden Verbindungen mit einer NH- Zahl gemäß DIN 53176 in der Fassung von November 2002 und/oder OH-Zahl gemäß DIN 53240-1 in der Fassung von Juni 2013 von 600 bis 4000 mg KOH/g.

In einer weiteren bevorzugten Ausführungsform enthält die Komponente **A1** mindestens 30 Gew.-%, bezogen auf das Gesamtgewicht der Komponente **A1**, mindestens eines Polyoxyalkylen-Copolymers, bestehend aus einem Starter, Propylenoxid und Ethylenoxid und einem Endblock aus Ethylenoxid, wobei das Gesamtgewicht der Endblöcke aus Ethylenoxid im Mittel 3 - 20 Gew.-%, bevorzugt 5 - 15 Gew.-%, besonders bevorzugt 6 - 10 Gew.-% bezogen auf das gesamte Gewicht aller Polyoxyalkylen-Copolymere beträgt.

**Komponente A2**

Als Komponente **A2** werden chemische und/oder physikalische Treibmittel eingesetzt.
Als chemisches Treibmittel **A2.1** werden beispielsweise Wasser oder Carbonsäuren und deren Gemische verwendet. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, N,N-dialkylcarbaminsäure, Oxalsäure, Malonsäure und Ricinolsäure, eingesetzt. Auch die Ammoniumsalze dieser Säuren sind geeignet. Als chemisches Treibmittel wird besonders bevorzugt Wasser eingesetzt.
Als physikalisches Treibmittel **A2.2** eingesetzt werden beispielsweise niedrig siedende organische Verbindungen wie z. B. Kohlenwasserstoffe, Ether, Ketone, Carbonsäureester, Kohlensäureester, halogenierte Kohlenwasserstoffe. Geeignet sind insbesondere organische Verbindungen, welche gegenüber der Isocyanatkomponente B inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele derartiger, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Difluormethan, Trifluormethan, Difluorethan, Tetrafluorethan, 1,1-Dichlor-2,2,2-trifluorethan, 2,2-Dichlor-2-fluorethan und Heptafluorpropan. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.
In einer besonderen Ausführungsform enthält die Komponente **A2**

A2.1 0,1 bis 10 Gew.-Teile, bevorzugt 1 bis 5 Gew.-Tle. (jeweils bezogen auf die Summe der Gew.-Teile aller Komponenten A = 100 Gew.-Teile) chemische Treibmittel
und/oder
A2.2 0 bis 15 Gew.-Teile (bezogen auf die Summe der Gew.-Teile aller Komponenten A = 100 Gew.-Teile) physikalische Treibmittel

Besonders bevorzugt wird als Komponente **A2** Wasser eingesetzt.

**Komponente A3**

Als Komponente **A3** werden Hilfs- und Zusatzstoffe verwendet wie

a) Katalysatoren (Aktivatoren),

b) oberflächenaktive Zusatzstoffe (Tenside), wie Emulgatoren und Schaumstabilisatoren insbesondere solche mit niedriger Emission wie beispielsweise Produkte der Tegostab® LF-Serie,

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Als Katalysatoren werden bevorzugt aliphatische tertiäre Amine (beispielsweise Triethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Aminoxide, aliphatische Amidine, cycloaliphatische Amidine, Harnstoff, Derivate des Harnstoffs (wie beispielsweise Aminoalkylharnstoffe), insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt (i) Harnstoff, Derivate des Harnstoffs und/oder (ii) die oben genannten Amine und Aminoether, dadurch gekennzeichnet, dass die Amine und Aminoether eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen. Als Beispiele für besonders bevorzugte Katalysatoren seien genannt: (3-Dimethylaminopropylamin)-Harnstoff, 1,1'-((3-(dimethylamino)propyl)imino)bis-2-propanol, N-[2-[2-(dimethylamino)ethoxy]ethyl]-N-methyl-1,3-propanediamin und 3-Dimethylaminopropylamin.

Bevorzugt liegt die Komponente A3 in einem Anteil von 0,5 bis 15 Gew.-Teile, bezogen auf die Summe der Gew.-Teile aller Komponenten A = 100 Gew.-Teile, vor.

**Komponente B**

Als Komponente **B** werden aliphatische, cycloaliphatische, araliphatische, aromatische und heterocyclische Polyisocyanate eingesetzt, beispielsweise solche der Formel (II)

$$Q(NCO)_n \qquad (II)$$

in der

n für eine ganze Zahl zwischen 2-4, vorzugsweise 2 oder 3 steht,
und

Q für einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen steht.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise werden als Komponente B mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

Ganz besonders bevorzugt wird als Komponente **B** eine Diphenylmethandiisocyanat-Mischung eingesetzt, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer alternativen ganz besonders bevorzugten Ausführungsform wird als Komponente **B** eine Diphenylmethandiisocyanat-Mischung eingesetzt, bestehend aus

a) 35 bis 45 Gew.-% 4,4'-Diphenylmethandiisocyanat und

b) 1 bis 5 Gew.-% 2,2'-Diphenylmethandiisocyanat und/oder 2,4'-Diphenylmethandiisocyanat und

c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

Die erfindungsgemäß erhaltenen Polyurethane sind bevorzugt Polyurethanschaumstoffe, besonders bevorzugt Polyurethanweichschaumstoffe oder Polyurethanhalbhartschaumstoffe. Zur Herstellung der Polyurethanschaumstoffe werden die Reaktionskomponenten nach dem an sich bekannten Einstufenverfahren, dem Prepolymerverfahren oder dem Semiprepolymerverfahren zur Umsetzung gebracht, wobei man sich oft maschineller Einrichtungen bedient.

Die Polyurethanschaumstoffe können als Form- oder auch als Blockschaumstoffe hergestellt werden, wobei die Formschaumstoffe heiß- oder auch kalthärtend hergestellt werden können.

Gegenstand der Erfindung sind daher ein Verfahren zur Herstellung von Polyurethanschaumstoffe, die nach diesem Verfahren hergestellten Polyurethanschaumstoffe und deren Verwendung zur Herstellung von Formteilen oder Blockware, sowie die Formteile bzw. die Blockware selbst.

Die nach der Erfindung erhältlichen Polyurethanschaumstoffe finden beispielsweise folgende Anwendung: Möbelpolsterungen, Textileinlagen, Matratzen, Automobilsitze, Kopfstützen, Armlehnen, Schwämme und Bauelemente, sowie Sitz- und Armaturverkleidungen, und können Kennzahlen von 60 bis 250, bevorzugt 70 bis 120, besonders bevorzugt 75 bis 120 und Raumgewichte von 4 bis 600 kg/m$^3$, bevorzugt 60 bis 120 kg/m$^3$ (Weichschaum) bzw. bevorzugt 15 bis 55 kg/m$^3$ (Halbhartschaum) aufweisen.

Unter der Isocyanat-Kennzahl (auch Kennzahl oder Isocyanat-Index genannt) wird der Quotient aus der tatsächlich eingesetzten Stoffmenge [Mol] an Isocyanatgruppen und der tatsächlich eingesetzten Stoffmenge [Mol] an Isocyanat-reaktiven Gruppen, multipliziert mit 100, verstanden:

$$Kennzahl = (Mole\ Isocyanatgruppen\ /\ Mole\ Isocyanat\text{-}reaktive\ Gruppen) * 100$$

Der NCO-Wert (auch: NCO-Gehalt, Isocyanatgehalt) wird bestimmt mittels EN ISO 11909:2007. Falls nicht anders angegeben, handelt es sich um die Werte bei 25°C.

In einer bevorzugten Ausführungsform der Erfindung betrifft die Erfindung ein Verfahren zur Herstellung von Polyurethanen, bevorzugt Polyurethanschaumstoffen, wobei die Komponenten

**A1** Verbindungen mit gegenüber Isocyanaten reaktionsfähigen Wasserstoffatomen enthaltend

**A1.1** 0,5 bis 60 Gew.-Teile (bezogen auf die Summe der Gew.-Teile aller Komponenten A = 100 Gew.-Teile) gegenüber Isocyanaten reaktionsfähige Wasserstoffatome aufweisende Verbindungen die von Alkylenoxid und einer α,β-ungesättigten Carbonsäure und/oder einem α,β-ungesättigte Carbonsäurderivat, bevorzugt Maleinsäure abgeleitete Baueinheiten enthalten, bevorzugt Polyetheresterpolyole und/oder Polyetherestercarbonatpolyole,

**A1.2** 29,0 bis 98,5 Gew.-Teile (bezogen auf die Summe der Gew.-Teile aller Komponenten A = 100 Gew.-Teile) gegenüber Isocyanaten reaktionsfähigen Wasserstoffatomen aufweisenden Verbindungen mit einer NH- Zahl gemäß DIN 53176 in der Fassung von November 2002 und/oder OH-Zahl gemäß DIN 53240-1 in der Fassung von Juni 2013 von 20 bis < 120 mg KOH/g,

**A1.3** 0 bis 60 Gew.-Teile (bezogen auf die Summe der Gew.-Teile aller Komponenten A = 100 Gew.-Teile) gegenüber Isocyanaten reaktionsfähigen Wasserstoffatomen aufweisenden Verbindungen mit einer NH- Zahl gemäß DIN 53176 in der Fassung von November 2002 und/oder OH-Zahl gemäß DIN 53240-1 in der Fassung von Juni 2013 von 120 bis < 600 mg KOH/g,

**A1.4** 0 bis 10 Gew.-Teile (bezogen auf die Summe der Gew.-Teile aller Komponenten A = 100 Gew.-Teile) gegenüber Isocyanaten reaktionsfähigen Wasserstoffatomen aufweisenden Verbindungen mit einer NH- Zahl gemäß DIN 53176 in der Fassung von November 2002 und/oder OH-Zahl gemäß DIN 53240-1 in der Fassung von Juni 2013 von 600 bis 4000 mg KOH/g,

**A2** Treibmittel, enthaltend

**A2.1** 0,1 bis 10 Gew.-Teile, bevorzugt 1 bis 5 Gew.-Teile (jeweils bezogen auf die Summe der Gew.-Teile aller Komponenten **A** = 100 Gew.-Teile), chemische Treibmittel wie Wasser und/oder

**A2.2** 0 bis 15 Gew.-Teile (bezogen auf die Summe der Gew.-Teile aller Komponenten **A** = 100 Gew.-Teile)

8

physikalische Treibmittel wie z. **B.** $CO_2$

und

**A3** 0,5 bis 10 Gew.-Teile (bezogen auf die Summe der Gew.-Teile aller Komponenten **A** = 100 Gew.-Teile) Hilfs- und Zusatzstoffe wie

    a) Katalysatoren,
    b) oberflächenaktive Zusatzstoffe,
    c) Pigmente und/oder Flammschutzmittel,

**B** Di- und/oder Polyisocyanaten mit einem Gehalt von >65 Gew.-% difunktionellen Isocyanaten, miteinander umgesetzt werden.

### Beispiele

Prüfmethoden:

Die Druckfestigkeit und Dämpfung der Schaumstoffe wurden in Anlehnung an DIN EN ISO 3386-1 in der Fassung von September 2010 in Aufschäumrichtung bestimmt und die Rohdichte gemäß DIN EN ISO 845 in der Fassung von Oktober 2009. Die Probenkörper hatten ein Volumen von 5x5x5 $cm^3$. Eine Vorkraft von 2 N wurde dabei eingestellt. Die Vorschubgeschwindigkeit betrug 50 mm/min, ausgenommen sind die Beispiele 10 bis 12 bei denen die Vorschubgeschwindigkeit 100 mm/min betrug.

Die Hydroxylzahl wurde gemäß DIN 53240-1 in der Fassung von Juni 2013 und die Luftdurchlässigkeit gemäß DIN EN ISO 7231 in der Fassung von Dezember 2010 bestimmt.

Der Druckverformungsrest (DVR) wurde gemäß DIN EN ISO 1856 in der Fassung von Januar 2008 gemessen. Wenn nicht anders angegeben, dann wurde der DVR mit 75% Druckverformung bei 70°C für 22h gemessen (Verfahren A).

Die Werte für die Zugfestigkeit und Bruchdehnung wurden bei 22°C und 48% relativer Luftfeuchte gemäß DIN EN ISO 1798 in der Fassung von April 2008 ermittelt.

Die Viskositätsmessungen wurden gemäß der Norm DIN 53019 (2008) durchgeführt.

Die Bestimmung der Aldehyd-Emissionen wurde in Anlehnung an die Technische Regel VDA 275 folgendermaßen durchgeführt:

a) Messmethode 1 (Flaschenmethode nach VDA 275):
In eine Glasflasche von einem Liter Volumen werden 50 Milliliter Wasser gegeben. Am Deckel wird eine Schaumstoffplatte der Größe 40x10x2 $cm^3$ frei hängend befestigt so dass der Schaumstoff nicht mit der wässrigen Lösung am Boden der Flasche in Kontakt ist. Die Flasche wird verschlossen und 3 Stunden in einen Umlufttrockenschrank bei 60 °C gelagert. Man lässt die Flasche auf Raumtemperatur abkühlen, entnimmt den Schaumstoff. Ein Aliquot der wässrigen Lösung wird mit einer Lösung von 0,3 mmol/Liter Dinitrophenylhydrazin (DNPH) in 3 mM phosphorsaurem Acetonitril umgesetzt. Man analysiert die Zusammensetzung der wässrigen Lösung per LC-MS/MS auf die Hydrazone der unten angegebenen Aldehyde. Zu jeder Schaumqualität werden drei Flaschen untersucht. Bei jedem Versuchslauf werden drei Flaschen ohne Schaumstoff mit untersucht. Der mittlere Blindwert wird von den Messwerten abgezogen. Auf dieser Basis wird auf die Emission der jeweiligen Aldehyde pro Kilogramm Schaumstoff (pro kg der Komponenten **A** bis **E**) zurückgerechnet. Die Angabe erfolgt im mg Aldehyd pro kg Schaumstoff.
b) Messmethode 2 (modifizierte Flaschenmethode):
In eine Glasflasche von einem Liter Volumen werden 25 Milliliter Wasser und 25 Milliliter einer Lösung von 0,3 mmol/Liter Dinitrophenylhydrazin (DNPH) in 3 mM phosphorsaurem Acetonitril gegeben. Der Gehalt an DNPH beträgt 7,5 $\mu$mol pro Flasche. Am Deckel wird eine Schaumstoffplatte der Größe 40x10x4 $cm^3$ frei hängend befestigt so dass der Schaumstoff nicht mit der wässrigen Lösung am Boden der Flasche in Kontakt ist. Die Flasche wird verschlossen und 3 Stunden in einen Umlufttrockenschrank bei 65 °C gelagert. Man läßt die Flasche auf Raumtemperatur abkühlen, entnimmt den Schaumstoff und analysiert die Zusammensetzung der wässrigen Lösung per LC-MS/MS auf die Hydrazone der unten angegebenen Aldehyde. Zu jeder Schaumqualität werden drei Flaschen untersucht. Bei jedem Versuchslauf werden drei Flaschen ohne Schaumstoff mit untersucht. Der mittlere Blindwert wird von den Messwerten abgezogen. Auf dieser Basis wird auf die Emission der jeweiligen Aldehyde pro Kilogramm Schaumstoff zurückgerechnet. Die Angabe erfolgt im mg Aldehyd pro kg Schaumstoff.

Die Messung der VOC- und FOG-Werte erfolgte gemäß der Technischen Regel VDA 278 des Verbandes der Automobilindustrie "Thermodesorptionsanalyse organischer Emissionen zur Charakterisierung von nichtmetallischen Kfz-Werkstoffen" in der Fassung von Oktober 2011. Die Angaben zu den VOC-Werten sind in mg Toluoläquivalenten pro kg Schaumstoff und die Angaben zu den FOG-Werten sind in mg Hexadecanäquivalenten pro kg Schaumstoff.

Die Bestimmung des Gehalts an aromatischen Aminen im Schaumstoff erfolgte entsprechend des Protokolls von G. Skarping durch Extraktion mit 0,1%iger Essigsäure (A. Marand, D. Karlsson, M. Dalene, G. Skarping, Analytica Chimica Acta, 2004. 510, 109-119; J. R. Johnson, D. Karlsson, M. Dalene, G. Skarping, Analytica Chimica Acta, 2010. 678 (1), 117-123), jedoch anders als in der angegebenen Literatur ohne anschließende Derivatisierung. Liegen die Messergebnisse unterhalb der Bestimmungsgrenze, so wird in den nachfolgenden Tabellen der Wert mit <0,2 mg/kg Schaumstoff angegeben, unterhalb der Nachweisgrenze mit <0,06 mg/kg Schaumstoff.

Der Brandtest ist angelehnt an den britischen Standard BS 5852:1990-Teil 2 mit der Zündquelle 4 ("Crib"), wurde jedoch ohne textile Deckschicht durchgeführt.

## Beschreibung der Versuche

Rohstoffe

| | |
|---|---|
| A1.1-1: | Terpolymer aus Propylenoxid, $CO_2$ und 9,4 Gew.-% Maleinsäureanhydrid mit einer Funktionalität von 2 und einer OH-Zahl von 27 mg KOH/g |
| A1.1-2: | Terpolymer aus Propylenoxid, $CO_2$ und 17,5 Gew.-% Maleinsäureanhydrid mit einer Funktionalität von 3 und einer OH-Zahl von 86 mg KOH/g. A1.1-2 enthält 12,8 Gew.-% - C(O)-O-Gruppen, 0,27 Gew.-% freies Propylencarbonat. Die Viskosität beträgt 50600 mPas bei 25°C und 3190 mPas bei 50°C. |
| A1.1-3 | Terpolymer aus Propylenoxid, $CO_2$ und Maleinsäureanhydrid mit einer Funktionalität von 2 und einer OH-Zahl von 56,6 mg KOH/g. A1.1-3 enthält 21 Gew.-% -C(O)-O-Gruppen, 0,36 Gew.-% freies Propylencarbonat. Die Viskosität beträgt 11850 mPas bei 25°C. |
| A1.2-1: | Polyetherpolyol mit einer OH-Zahl von 31 mg KOH/g |
| A1.2-2: | Dispersion von Styrol-Acrylnitril-Copolymer (42 Gew.-%) in einem Glyzerin-gestarteten Polypropylenoxid-Polyethylenoxid-Block-Copolymer (OH-Zahl 20 mg KOH/g) |
| A1.2-3: | Glyzerin-gestartetes Polypropylenoxid-Polyethylenoxid-block-Copolymer mit OH-Zahl 37 mg KOH/g und >50% Ethylenoxid |
| A1.2-4: | Glyzerin-gestartetes Polypropylenoxid-Polyethylenoxid-block-Copolymer mit OH-Zahl 28 mg KOH/g und > 14% Ethylenoxid |
| A1.2-5: | Polyetherpolyol mit einer OH-Zahl von 28 mg KOH/g und einer Funktionalität von 2 |
| A1.2-6: | PHD-Polyol mit einem Feststoffgehalt von 20 Gew.-% und einer OH-Zahl von 28 mg KOH/g |
| A1.2-7: | Polypropylenglycol $M_n$ =2000 g/mol |
| A1.2-8: | Polypropylenglycol $M_n$ =1000 g/mol |
| A1.2-9: | Glyzerin-gestartetes Polypropylenoxid-Polyethylenoxid-block-Copolymer mit einer OH-Zahl von 35 mg KOH/g und 14% Ethylenoxid |
| A1.2-10: | Sorbitol-gestartetes Polypropylenoxid-Polyethylenoxid-block-Copolymer mit einer OH-Zahl von 100 mg KOH/g und >50% Ethylenoxid, hier eingesetzt als Zellöffner |
| A1.3-1: | Glyzerin-gestartetes Polypropylenoxid mit OH-Zahl 232 mg KOH/g |
| A1.3-2: | Triethanolamin-gestartetes Polypropylenoxid mit OH-Zahl 155 mg KOH/g |
| A1.4-1: | Diethanolamin |
| A2.1-1: | Wasser |
| A3-1: | Katalysator-Mischung aus Niax® A400 (Handelsprodukt der Firma Evonik) und A3-3 im Verhältnis 4:6 (nach Gewicht) |
| A3-2: | Schaumstabilisator Tegostab® B8734 LF2, Handelsprodukt der Firma Evonik |
| A3-3: | Dabco® 33LV (Handelsprodukt der Firma Evonik) |
| A3-4: | Schaumstabilisator Tegostab® B8783LF2, Handelsprodukt der Firma Evonik |
| A3-5: | Lösung von Harnstoff in Wasser mit einer Konzentration von 173 g pro Liter |
| A3-6: | Dabco® T9 (Handelsprodukt der Firma Evonik) |
| A3-7: | Levagard® PP (Umsetzungsprodukt aus Phosphoroxychlorid und Propylenoxid) |
| A3-8: | Exolit® OP L1030 (wässrige Lösung, Fa. Clariant) |
| A3-9: | Rabitle® FP390 (ein Phosphazenderivat der Firma Fushimi) |
| A3-10: | Phosphorsäure (85 Gew.-%ig) |
| A3-11: | Niax® A1 (Handelsprodukt der Firma Evonik) |

(fortgesetzt)

A3-12: Schaumstabilisator Tegostab® BF2370, Handelsprodukt der Firma Evonik

A3-13: Katalysatormischung aus Polycat® 15 (Handelsprodukt der Firma Evonik) und Jeffcat® ZF-10 (Handelsprodukt der Firma Huntsman) im Gewichtsverhältnis von 9:2.

A3-14: Katalysatormischung aus Dabco® NE1095 und Dabco® NE300 (Handelsprodukte der Firma Evonik) im Gewichtsverhältnis von 4:3.

A3-15: Schaumstabilisator Tegostab® B8736 LF2, Handelsprodukt der Firma Evonik

B-1: Handelsübliches Gemisch aus 80% 2,4- und 20% 2,6-TDI

B-2: Gemisch aus B-1 und polymerem MDI

B-3: Gemisch aus 67% 2,4- und 33% 2,6-TDI

B-4: Handelsübliches Umsetzungsprodukt aus 50 Gew.-% Uretdionimin-modifiziertem 4,4'-MDI, 37,5 Gew.-% polymerem Isocyanat und 12,5 Gew.-% A1.2-8. B-4 weist einen NCO-Gehalt von 25,8 Gew.-% NCO und eine Viskosität (25°C) von 192 mPa*s auf.

B-5: Umsetzungsprodukt aus 50 Gew.-% Uretdionimin-modifiziertem 4,4'-MDI, 37,5 Gew.-% polymerem Isocyanat und 12,5 Gew.-% A1.1-2. B-5 weist einen NCO-Gehalt von 25,5 Gew.-% NCO und eine Viskosität (25°C) von 494 mPa*s auf.

B-6: Umsetzungsprodukt aus 50 Gew.-% Uretdionimin-modifiziertem 4,4'-MDI, 37,5 Gew.-% polymerem Isocyanat und 12,5 Gew.-% A1.1-3. B-6 weist einen NCO-Gehalt von 26,0 Gew.-%NCO und eine Viskosität (25°C) von 244 mPa*s auf.

Die Vergleichsbeispiele basieren auf dem hydroxyfunktionellen Additiv Hydroxyethylmethacrylat "HEMA" entsprechend der Lehre von DE 199 19 826. Die erfindungsgemäße Verbindung **A1.1** wird zum Vergleich in den Beispielen ebenfalls als Additiv bezeichnet.

Zur Herstellung der Polyurethan-Schaumstoffe werden die notwendigen Mengen der in den Tabellen angegebenen Komponenten mit Ausnahme des Isocyanats bzw. des Präpolymers (Versuchsreihen 4 und 5) in einem Pappbecher mit Blechboden (Volumen: ca. 850ml) vorgelegt und mit einem Rührwerk (Fa. Pendraulik) mit Standardrührscheibe (d = 64 mm) bei 4200 U/min 45 Sekunden lang mit Luft beladen.

Das Isocyanat bzw. das Präpolymer werden in einen geeigneten Becher eingewogen und wieder entleert (Auslaufzeit: 3 s). Dieser, an den Innenwandungen noch benetzte Becher wird tariert und wieder mit der angegebenen Isocyanatmenge bzw. Präpolymermenge gefüllt. Das Isocyanat bzw. das Präpolymer werden den anderen Komponenten zugesetzt (Auslaufzeit: 3 s). Die erhaltene Mischung aus Isocyanat bzw. Präpolymer und den anderen Komponenten wird mit einem Rührwerk (Fa. Pendraulik) für 5 Sekunden intensiv vermischt. Ca. 93 Gramm des Reaktionsgemisches werden in eine 23°C warme mit Teflonfolie ausgekleidete Kastenform aus Aluminium mit 1,6 dm$^3$ Volumen gegossen. Die Form wird verschlossen und verriegelt. Nach sechs Minuten wird die Verriegelung geöffnet und entspannt.

Alle Polyurethan-Schaumstoffe wurden nach der Herstellung 7 Tage in einem Abzug bei 20-23°C aufbewahrt.

**Versuchsserie 1: Polyurethan-Weichschaumstoffe**

**Tabelle 1: Formulierung und Eigenschaften der Polyurethan-Weichschaumstoffe**

| Beispiel | | 1* | 2 | 3 | 4* | 5* |
|---|---|---|---|---|---|---|
| Gehalt an Additiv | mol/kg [1] | - | 0,10 | 0,05 | 0,10 | 0,05 |
| A1.1-1 | Gew.-Tle. | - | 12,98 | 6,49 | - | - |
| HEMA | Gew.-Tle. | - | - | - | 1,62 | 0,81 |
| A1.2-1 | Gew.-Tle. | 57,32 | 49,15 | 53,24 | 56,36 | 56,85 |
| A1.2-2 | Gew.-Tle. | 38,20 | 33,38 | 35,79 | 37,55 | 37,87 |
| A1.4-1 | Gew.-Tle. | 0,76 | 0,76 | 0,76 | 0,75 | 0,75 |
| A2.1-1 | Gew.-Tle. | 2,67 | 2,67 | 2,67 | 2,67 | 2,67 |
| A3-1 | Gew.-Tle. | 0,48 | 0,48 | 0,48 | 0,48 | 0,48 |
| A3-2 | Gew.-Tle. | 0,57 | 0,57 | 0,57 | 0,57 | 0,57 |

(fortgesetzt)

| Beispiel | | 1* | 2 | 3 | 4* | 5* |
|---|---|---|---|---|---|---|
| Isocyanat | | B-1 | B-1 | B-1 | B-1 | B-1 |
| Mischungsverhältnis A: B [2] | | 24,4 | 24,4 | 25,4 | 26,4 | 27,4 |
| Liegezeit | s | 5 bis 6 | 5 | 5 | 5 | 5 |
| Abbindezeit | s | 58 | 60 | 60 | 72 | 70 |
| Steigzeit | s | 93 | 105 | 105 | 135 | 123 |
| Zellstruktur | | Gut | Gut | Gut | Gut | Gut |
| Haut | | Mittel | Mittel | Mittel | Mittel | Mittel |
| Aushärtung und Stabilität | | Gut | Gut | Gut | Gut | Gut |
| Rohdichte | kg/m$^3$ | 79,6 | 79,8 | 79,7 | 79,8 | 79,9 |
| Druckfestigkeit | kPa | 5,8 | 5,2 | 5,6 | 5,1 | 5,7 |
| Dämpfung | % | 20 | 22 | 20 | 22 | 21 |
| DVR | % | 7 | 8 | 7 | 11 | 10 |
| Zugfestigkeit | MPa | 0,15 | 0,15 | 0,14 | 0,14 | 0,15 |
| Reißdehnung | % | 127 | 132 | 128 | 145 | 144 |
| Luftdurchlässigkeit | cfm | 171 | 154 | 175 | 177 | 185 |
| *nicht erfindungsgemäß<br>[1] Bezogen auf mol des Additivs pro kg der Komponenten **A** und **B.**<br>[2] Gibt das Mischungsverhältnis der Gewichtssumme der Komponente **A** zum Isocyanat **B** an, bezogen auf **A** = 100 Gew.-Teile. | | | | | | |

Die Polyurethan-Weichschaumstoffe mit der erfindungsgemäßen Verbindung **A1.1** weisen ähnliche Eigenschaften auf wie ein vergleichbarer Polyurethan-Weichschaumstoff ohne Additiv (Beispiel 1).

Anders als beim Einsatz des aus dem Stand der Technik bekannten Additiv HEMA, führt der Einsatz der erfindungsgemäßen Verbindung **A1.1** zu keiner signifikante Verschlechterung des Druckverformungsrestes gegenüber einem Polyurethan-Weichschaumstoff ohne Additiv. Die Tabelle 2 zeigt weiterhin, dass die Polyurethan-Weichschaumstoffe enthaltend die erfindungsgemäße Verbindung **A1.1** (Beispiele 2 und 3) geringere Anteile an aromatischen Aminen aufweisen als das Additiv HEMA (Beispiele 4 und 5).

**Tabelle 2: Gehalt an aromatischen Aminen und Emissionen in den Polyurethan-Weichschaumstoffen**

| Beispiel | | 1* | 2 | 3 | 4* | 5* |
|---|---|---|---|---|---|---|
| Gehalt an Additiv | mol/kg [1] | - | 0,10 | 0,05 | 0,10 | 0,05 |
| **VDA 278** | | | | | | |
| Summe VOC | mg/kg [3] | 2.011 | 1.982 | 1.783 | 2.502 | 2.697 |
| Summe FOG | mg/kg [3] | 81 | 47 | 36 | 38 | 188 |
| **Extraktion mit Essigsäure** | | | | | | |
| 2,4-TDA | mg/kg Schaumstoff | 0,6 | 0,3 | 0,4 | 0,1 | 0,3 |
| 2,6 TDA | mg/kg Schaumstoff | 115 | 63 | 75 | 75 | 96 |
| Total | mg/kg Schaumstoff | 116 | 63 | 75 | 75 | 96 |
| Delta zu Beispiel 1 | | | -45% | -35% | -35% | -17% |
| *nicht erfindungsgemäß<br>[1] Bezogen auf mol des Additivs pro kg der Komponenten **A** und **B**<br>[3] Bezogen auf mg Toluoläquivalenten (VOC) bzw. mg Hexadecanäquivalenten (FOG) pro kg des Schaumstoffes. | | | | | | |

**Versuchsserie 2: CMHR-Formschaumstoff**

Die Tabelle 3 zeigt, dass alle CMHR-Formschaumstoffe mit einem Flammschutzmittelgemisch eine geringere Rohdichte und Druckfestigkeit aufweisen als das Beispiel 6 ohne Flammschutzmittelgemisch. Die Verringerung der Druckfestigkeit ist beim erfindungsgemäßen CMHR-Formschaumstoff am wenigsten stark ausgeprägt (Beispiel 9). Beispiel 9 zeigt auch eine höhere Dämpfung und einen besseren Druckverformungsrest wie bei den CMHR-Formschaumstoffen mit Flammschutzmittelgemisch (Beispiele 7 und 8). Es zeigt sich also, dass ein Flammschutzmittelgemisch insgesamt die mechanischen Eigenschaften beeinträchtigt, durch den Einsatz der erfindungsgemäßen Verbindung **A1.1** kann diese Veränderung jedoch minimiert werden.

**Tabelle 3: Formulierung und Eigenschaften der CMHR-Formschaumstoffe**

| Beispiele | | | 6* | 7* | 8* | 9 |
|---|---|---|---|---|---|---|
| Flammschutzpaket | | | TCPP | L1030/FP390 | L1030/TCPP | L1030/FP390 |
| A1.1-1 | Gew.-Tle. | | - | - | - | 21,91 |
| A1.2-3 | Gew.-Tle. | | - | 1,39 | 1,60 | 1,62 |
| A1.2-4 | Gew.-Tle. | | 24,15 | 24,18 | 23,94 | - |
| A1.2-5 | Gew.-Tle. | | - | 7,25 | - | 8,12 |
| A1.2-6 | Gew.-Tle. | | 56,35 | 56,41 | 55,86 | 56,81 |
| A1.4-1 | Gew.-Tle. | | 1,39 | - | 0,58 | 0,59 |
| A2.1-1 | Gew.-Tle. | | 2,85 | - | - | - |
| A3-3 | Gew.-Tle. | | 0,10 | 0,06 | 0,10 | 0,10 |
| A3-4 | Gew.-Tle. | | 0,29 | 0,29 | 0,30 | 0,29 |
| A3-5 | Gew.-Tle. | | 0,24 | 0,24 | 0,24 | 0,24 |
| A3-6 | Gew.-Tle. | | 0,14 | 0,06 | 0,08 | 0,06 |
| A3-7 | Gew.-Tle. | | 14,49 | - | 12,77 | - |
| A3-8 | Gew.-Tle. | | - | 4,46 | 4,42 | 4,50 |
| A3-9 | Gew.-Tle. | | - | 5,64 | - | 5,68 |
| A3-10 | Gew.-Tle. | | - | - | 0,12 | 0,08 |
| Isocyanat | | | B-2 | B-2 | B-2 | B-2 |
| Mischungsverhältnis A: B [2] | Gew.-Tle. | | 39,5 | 36,2 | 37,3 | 38,2 |
| Kennzahl | | | 106 | 106 | 106 | 106 |
| **Brandtest** | | | | | | |
| Masse vor dem Anzünden | g | | 124 | 91 | 106 | 103 |
| Selbstverlöschung | s | | Nein | Nein | 88 | 114 |
| Masse nach der Verbrennung | g | | ** | ** | 100 | 88 |
| Massenverlust | g | | ** | ** | 6 | 15 |
| Rohdichte | kg/m$^3$ | | 28,0 | 25,7 | 26,8 | 26,4 |
| Druckfestigkeit | kPa | | 3,6 | 2,1 | 2,6 | 2,9 |
| Dämpfung | % | | 33,0 | 34,0 | 38,0 | 42,0 |

(fortgesetzt)

| Brandtest | | | | | |
|---|---|---|---|---|---|
| DVR | % | 9 | 60 | 33 | 24 |

*nicht erfindungsgemäß;
** das Feuer wurde durch Fluten der Brandkammer mit Stickstoff gelöscht und der teerige Rückstand wurde vor Entsorgung nicht gewogen.
[2] Gibt das Mischungsverhältnis der Gewichtssumme der Komponente **A** zum Isocyanat **B** an, bezogen auf **A** = 100 Gew.-Teile.

Um einen selbstverlöschenden CMHR-Formschaumstoff zu erhalten, ist bei einer Formulierung ohne die erfindungsgemäße Verbindung **A1.1** ein Flammschutzmittelgemisch mit einer halogenhaltigen Komponente notwendig (Beispiel 8). Der Zusatz der erfindungsgemäßen Verbindung **A1.1** führt dazu, dass der CMHR-Formschaumstoff auch halogenfrei geschützt selbstverlöschend ist.
Die Tabelle 4 zeigt, dass das erfindungsgemäße Beispiel 9 im Vergleich mit den Beispielen 7 und 8 ohne die erfindungsgemäße Verbindung **A1.1** die niedrigsten Emissionen aufweist. Beispiel 8 mit dem halogenhaltigen Flammschutzmittelgemisch enthält weiterhin mit Essigsäure extrahierbare Spuren von TDA (Tabelle 5). Auch das ist im selbstverlöschenden erfindungsgemäßen CMHR-Formschaumstoff aus Beispiel 9 nicht der Fall. Es ist also auch unter dem Gesichtspunkt des Anteils an unerwünschten Spurenstoffen und Emissionen vorteilhaft, die erfindungsgemäße Formulierung zu verwenden.

### Tabelle 4: Emissionen aus CMHR-Formschaumstoffen

| Beispiel | | 7* | 8* | 9 |
|---|---|---|---|---|
| **VDA 278** | | | | |
| Primäre aromatische Amine (FOG) | mg/kg [3] | 14 | 20 | 15 |
| Chlorphosphate (VOC) | mg/kg [3] | - | 11539 | - |
| Chlorphosphate (FOG) | mg/kg [3] | - | 18212 | - |
| cPC aus A1.1-1 (VOC) | mg/kg [3] | - | - | 33 |
| Sonstige VOC | mg/kg [3] | 212 | 288 | 82 |
| Sonstige FOG | mg/kg [3] | 485 | 614 | 366 |

*nicht erfindungsgemäß
[3] Bezogen auf mg Toluoläquivalenten (VOC) bzw. mg Hexadecanäquivalenten (FOG) pro kg des Schaumstoffes.

### Tabelle 5: Gehalt an aromatischen Aminen in den CMHR-Formschaumstoffen

| Beispiel | | 6* | 7* | 8* | 9 |
|---|---|---|---|---|---|
| **Extraktion mit Essigsäure** | | | | | |
| 2,4-TDA | mg/kg Schaumstoff | <0,06 | <0,2 | 0,3 | <0,06 |
| 2,6-TDA | mg/kg Schaumstoff | <0,06 | <0,2 | 0,5 | <0,2 |
| 2,2'-MDA | mg/kg Schaumstoff | <0,06 | <0,2 | <0,06 | <0,06 |
| 2,4'-MDA | mg/kg Schaumstoff | <0,06 | <0,2 | <0,06 | <0,06 |
| 4,4'-MDA | mg/kg Schaumstoff | <0,06 | <0,06 | <0,06 | <0,06 |

*nicht erfindungsgemäß

**Versuchsserie 3: viskoelastischer Blockschaum**

**Tabelle 6: Formulierung und Eigenschaften der viskoelastischen Blockschaumstoffe**

| Beispiel | | 10* | 11 | 12 |
|---|---|---|---|---|
| A1.1-1 | Gew.-Tle. | - | 24,62 | 20,16 |
| A1.2-7 | Gew.-Tle. | 26,03 | 24,62 | 24,00 |
| A1.2-8 | Gew.-Tle. | 18,32 | 18,71 | 18,24 |
| A1.3-1 | Gew.-Tle. | 52,07 | 14,77 | 18,24 |
| A1.3-2 | Gew.-Tle. | - | 13,79 | 15,36 |
| A2.1-1 | Gew.-Tle. | 1,93 | 1,97 | 2,50 |
| A3-3 | Gew.-Tle. | 0,43 | 0,44 | 0,43 |
| A3-5 | Gew.-Tle. | 0,39 | 0,39 | 0,38 |
| A3-11 | Gew.-Tle. | 0,15 | - | - |
| A3-12 | Gew.-Tle. | 0,67 | 0,69 | 0,67 |
| Kennzahl | | 101 | 101 | 101 |
| Isocyanat | | B-3 | B-1 | B-1 |
| Mischungsverhältnis A: B [2] | | 43,6 | 34,5 | 41,0 |
| Startzeit | s | 6 | 6 | 6 |
| Abbindezeit | s | 195 | 205 | 180 |
| Steigzeit | s | 90 | 90 | 240 |
| Zellstruktur (Poren) | | Mittel | Mittel | mittel |
| Haut | | Dick | Ok | ok |
| Störung an den Seiten | | Nein | Nein | nein |
| Ausreaktion | | Langsam | langsam | langsam |
| Stabilität | | Gut | Gut | gut |
| Gesamtbewertung | | Zu niedrig gestiegen | Gut | gut |
| Viskoelastisch | | Normal | Ja | Ja |
| Rohdichte | kg/m$^3$ | 47 | 38 | 34 |
| Druckfestigkeit | kPa | 2,5 | 2,1 | 2,5 |
| Dämpfung | % | 56 | 49 | 65 |
| Luftdurchlässigkeit | cfm | 11 | 16 | 2 |
| *nicht erfindungsgemäß<br>[2] Gibt das Mischungsverhältnis der Gewichtssumme der Komponente **A** zum Isocyanat **B** an, bezogen auf **A** = 100 Gew.-Teile. | | | | |

In der Versuchsserie 3 wurden mit der erfindungsgemäßen Verbindung **A1.1** viskoelastische Blockschaumstoffe hergestellt. Die Tabelle 6 zeigt, dass diese Schaumstoffe gute viskoelastische Eigenschaften aufweisen und die erfindungsgemäße Verbindung **A1.1** auch zur Herstellung viskoelastischer Blockschaumstoffe geeignet ist. Zusätzlich weisen die erfindungsgemäßen Schaumstoffe aus den Beispielen 11 und 12 eine deutlich geringere Emission von leicht flüchtigen Stoffen auf als der Schaumstoff aus Beispiel 10 ohne die erfindungsgemäße Verbindung **A1.1.**

**Tabelle 7: Gehalt an aromatischen Aminen und Emission der viskoelastischen Blockschaumstoffe**

| Beispiel | | | 10* | 11 | 12 |
|---|---|---|---|---|---|
| **VDA 278** | | | | | |
| Oligopropylenglycol aus A1 in VOC | mg/kg [3] | | 15 | 4 | 2 |
| Propylencarbonat aus A1.1-1 | mg/kg [3] | | - | 91 | 48 |
| TEDA aus A3-3 | mg kg [3] | | 1005 | 716 | 597 |
| BDMAEE aus A3-4 | mg/kg [3] | | 851 | - | - |
| Unbekannt | mg/kg [3] | | 22 | 4 | - |
| Total VOC | mg/kg [3] | | 1900 | 818 | 649 |
| **Extraktion mit Essigsäure** | | | | | |
| 2,4-TDA | mg/kg Schaumstoff | | <0,06 | <0,06 | <0,06 |
| 2,6-TDA | mg/kg Schaumstoff | | <0,06 | <0,06 | <0,06 |
| *nicht erfindungsgemäß<br>[3] Bezogen auf mg Toluoläquivalenten (VOC) pro kg des Schaumstoffes | | | | | |

**Versuchsserie 4: Einsatz der Verbindung A1.1 als Teil eines Präpolymers**

In der Versuchsserie 4 wird die erfindungsgemäße Verbindung **A1.1** als Teil eines Präpolymers eingesetzt. Die Tabelle 8 zeigt, dass die erfindungsgemäße Verbindung **A1.1** gleichzeitig als Präpolymer und auf der Polyolseite eingesetzt werden kann und zu Schaumstoffen mit viskoelastischen Verhalten führt.

**Tabelle 8: Formulierung und Eigenschaften von Schaumstoffen mit Verbindung A1.1-2 als Präpolymer und auf Polyolseite**

| Beispiel | | | 13* | 14 | 15 |
|---|---|---|---|---|---|
| A1.1-2 | Gew.-Tle. | | 0 | 47,0 | 48,5 |
| A1.2-9 | Gew.-Tle. | | 91,8 | 51,8 | 41,8 |
| A1.2-10 | Gew.-Tle. | | 2,5 | 2,5 | 2,5 |
| A2.1-1 | Gew.-Tle. | | 3,1 | 3,1 | 3,1 |
| A3-2 | Gew.-Tle. | | 1 | 1 | 1 |
| A3-13 | Gew.-Tle. | | 0.9 | 0,96 | 0,96 |
| A3-14 | Gew.-Tle. | | 0,7 | 0,74 | 0,74 |
| Kennzahl | - | | 90 | 90 | 90 |
| Isocyanat | - | | B-4 | B-5 | B-5 |
| Mischungsverhältnis A: B [2] | Gew.-Tle. | | 64,4 | 70,5 | 71,9 |
| Startzeit | s | | 6 | 7 | 7 |
| Gelzeit | s | | 67 | 48 | 45 |
| Steigzeit | s | | 85 | 90 | 80 |
| Zellstruktur (Poren) | - | | Mittel | Fein | Fein |
| Haut | - | | Gut | Gut | Gut |
| Ausreaktion | - | | Gut | Gut | Gut |

(fortgesetzt)

| Beispiel | | 13* | 14 | 15 |
|---|---|---|---|---|
| Rohdichte | kg/m$^3$ | 57 | 55 | 56 |

* nicht erfindungsgemäß
[2] Gibt das Mischungsverhältnis der Gewichtssumme der Komponente **A** zum Isocyanat **B** an, bezogen auf **A** = 100 Gew.-Teile.

In der Tabelle 9 werden Formulierungen mit der erfindungsgemäßen Verbindung **A1.1** als Teil eines Präpolymers und bei verschiedenen Isocyanat-Kennzahlen eingesetzt. Die Gegenüberstellung der erfindungsgemäßen Beispiele 17 und 19 mit den Vergleichsbeispielen 16 und 18 zeigt, dass die mechanischen Eigenschaften der Schaumstoffe im Rahmen der üblichen Abweichungen vergleichbar sind.

**Tabelle 9: Formulierung und Eigenschaften von Schaumstoffen mit Verbindung A1.1-3 als Teil eines Präpolymers**

| Beispiel | | 16* | 17 | 18* | 19 |
|---|---|---|---|---|---|
| A1.2-9 | Gew.-Tle. | 90,42 | 90,42 | 90,42 | 90,42 |
| A1.2-10 | Gew.-Tle. | 4 | 4 | 4 | 4 |
| A2.1-1 | Gew.-Tle. | 3,1 | 3,1 | 3,1 | 3,1 |
| A3-2 | Gew.-Tle. | 1,03 | 1,03 | 1,03 | 1,03 |
| A3-13 | Gew.-Tle. | 0,55 | 0,55 | 0,55 | 0,55 |
| A3-14 | Gew.-Tle. | 0,9 | 0,9 | 0,9 | 0,9 |
| Isocyanat | | B-4 | B-6 | B-4 | B-6 |
| Kennzahl | - | 70 | 70 | 90 | 90 |
| Entformzeit | Min | 57 | 57 | 57 | 57 |
| Formtemperatur | °C | RT | RT | RT | RT |
| Formvolumen | L | 25,4 | 25,4 | 25,4 | 25,4 |
| Formteil Gewicht | g | 1300 | 1300 | 1300 | 1300 |
| Startzeit | s | 20 | 17 | 20 | 14 |
| Abbindezeit | s | 125 | 113 | 130 | 130 |
| Steigzeit | s | 125 | 125 | 130 | 130 |
| Rührgeschwindigkeit | U/min | 4200 | 4200 | 4200 | 4200 |
| Zellstruktur | - | 0-Wert | entspr. 0-Wert | 0-Wert | entspr. 0-Wert |
| Haut | - | Gut | gut | gut | gut |
| Ausreaktion | - | Gut | gut | gut | gut |
| Stabilität | - | 0-Wert | entspr. 0-Wert | 0-Wert | entspr. 0-Wert |
| Rohdichte | kg/m$^3$ | 53,9 | 53,6 | 50,0 | 50,9 |
| Druckfestigkeit | kPa | 3,6 | 3,3 | 7,0 | 7,2 |
| Dämpfung | % | 0,24 | 0,26 | 0,31 | 0,31 |
| Rohdichte nach Alterung [4] | kg/m$^3$ | 54,3 | 54,1 | 50,2 | 51,1 |
| Druckfestigkeit nach Alterung [4] | kPa | 3,2 | 2,8 | 6,4 | 6,5 |
| Dämpfung nach Alterung [4] | % | 0,26 | 0,27 | 0,33 | 0,33 |
| Veränderung der Druckfestigkeit | % | -11 | -15 | -9 | -10 |

(fortgesetzt)

| Beispiel | | 16* | 17 | 18* | 19 |
|---|---|---|---|---|---|
| Zugfestigkeit | N/mm$^2$ | 0,06 | 0,07 | 0,09 | 0,11 |
| Bruchdehnung | % | 88 | 98 | 79 | 79 |
| DVR 50% | % | 7 | 8 | 5 | 7 |
| DVR 75% | % | 64 | 67 | 8 | 9 |
| DVR 50% nach Alterung [4] | % | 5 | 6 | 6 | 8 |

* nicht erfindungsgemäß
[4] Die Probe wurde vor der Messung für 3 Stunden bei 105°C in einem Dampfautoklav gealtert

Die Polyurethanschaumstoffe der Beispiele 16 bis 19 weisen vergleichbare mechanische Eigenschaften auf. Der Einsatz der erfindungsgemäßen Verbindung **A1.1** führt aber zusätzlich zu einer Verminderung der Emission aus den Schaumstoffen. In Tabelle 10 ist eine deutliche Abnahme der VOC-Emissionen zu erkennen, obwohl die erfindungsgemäße Verbindung **A1.1** Propylencarbonat enthält und emittiert. Die insgesamt nach VDA 278 gemessene Emission ist bei den erfindungsgemäßen Beispielen 17 und 19 deutlich geringer als die Emission der PolyurethanSchaumstoffe der Beispiele 16 und 18.

An der gealterten Probe ist ebenfalls der Vorteil der Modifikation in der Methode VDA275 bezüglich der Sichbarkeit insbesondere von Acetaldehyd zu erkennen. Es zeigt sich, dass der Einsatz der erfindungsgemäßen Verbindung **A1.1** auch zu einer Verringerung der Aldehydemissionen führt.

**Tabelle 10: Emission der Schaumstoffe aus Tabelle 9**

| Beispiele | | | 16* | 17 | 18* | 19 |
|---|---|---|---|---|---|---|
| **VDA 278** | | | | | | |
| Oligomere Propylenglycole | VOC | mg/kg$^3$ | 169 | 80 | 26 | 14 |
| | FOG | mg/kg$^3$ | 99 | 181 | 16 | 34 |
| Aliphatisches Amin | VOC | mg/kg$^3$ | 119 | 57 | 93 | 42 |
| | FOG | mg/kg$^3$ | 2 | 7 | 2 | 7 |
| Siloxane aus A3-5 | VOC | mg/kg$^3$ | 405 | 135 | 332 | 126 |
| | FOG | mg/kg$^3$ | 33 | 49 | 23 | 22 |
| cPC aus A1.1-3 | VOC | mg/kg$^3$ | | 25 | | 32 |
| Acridin aus B | FOG | mg/kg$^3$ | 2 | 1 | 1 | 0 |
| Antioxidantien und ihre Abbauprodukte | FOG | mg/kg$^3$ | 1 | 2 | 1 | 1 |
| Total VOC + FOG | | mg/kg$^3$ | 731 | 536 | 478 | 264 |
| **VDA275 (Standard)** | | | | | | |
| Formaldehyd | | mg/kg Schaumstoff | 2,7 | 2,3 | 2,7 | 2,4 |
| Acetaldehyd | | mg/kg Schaumstoff | <0,3 | <0,3 | 0,4 | <0,3 |
| Propionaldehyd | | mg/kg Schaumstoff | <0,3 | <0,3 | <0,3 | <0,3 |
| Acrolein | | mg/kg Schaumstoff | <0,3 | <0,3 | <0,3 | <0,3 |
| **VDA275 nach Alterung [4] (Standard)** | | | | | | |
| Formaldehyd | | mg/kg Schaumstoff | 2,5 | 2,1 | 2,0 | 1,6 |
| Acetaldehyd | | mg/kg Schaumstoff | <0,3 | <0,3 | <0,3 | <0,3 |
| Propionaldehyd | | mg/kg Schaumstoff | <0,3 | <0,3 | <0,3 | <0,3 |
| Acrolein | | mg/kg Schaumstoff | <0,3 | <0,3 | <0,3 | <0,3 |

(fortgesetzt)

| VDA275 (modifiziert) | | | | | | |
|---|---|---|---|---|---|---|
| Formaldehyd | | mg/kg Schaumstoff | 3,3 | 2,6 | 2,7 | 1,9 |
| Acetaldehyd | | mg/kg Schaumstoff | <0,3 | <0,3 | 0,4 | <0,3 |
| Propionaldehyd | | mg/kg Schaumstoff | <0,3 | <0,3 | <0,3 | <0,3 |
| Acrolein | | mg/kg Schaumstoff | <0,3 | <0,3 | <0,3 | <0,3 |
| VDA275 nach Alterung[4] (modifiziert) | | | | | | |
| Formaldehyd | | mg/kg Schaumstoff | 5,6 | 4,8 | 6,6 | 5,7 |
| Acetaldehyd | | mg/kg Schaumstoff | 1,1 | 0,6 | 1,3 | 0,8 |
| Propionaldehyd | | mg/kg Schaumstoff | <0,3 | <0,3 | <0,3 | <0,3 |
| Acrolein | | mg/kg Schaumstoff | <0,3 | <0,3 | <0,3 | <0,3 |

\* nicht erfindungsgemäß
[3] Bezogen auf mg Toluoläquivalenten (VOC) bzw. mg Hexadecanäquivalenten (FOG) pro kg des Schaumstoffes.
[4] Die Probe wurde vor der Messung für 3 Stunden bei 105°C in einem Dampfautoklav gealtert

**Versuchsserie 5: Formteile aus Polyurethan-Weichschaumstoff**

In der Versuchsserie 5 wird die Verminderung von Emissionen durch die erfindungsgemäße Verbindung **A1.1** in Formteilen aus Polyurethan-Weichschaumstoffen dargestellt. Der Test nach Skarping in Tabelle 11 zeigt, dass selbst geringe Mengen der erfindungsgemäßen Verbindung **A1.1** zu einer Verminderung der Emissionen führt.

**Tabelle 11:**

| Beispiel | | 20* | 21 |
|---|---|---|---|
| A1.1-1 | GewTle. | - | 1,0 |
| A1.2-1 | GewTle. | 60,0 | 60,0 |
| A1.2-2 | GewTle. | 40,0 | 40,0 |
| A1.4-1 | GewTle. | 0,80 | 0,80 |
| A2.1-1 | GewTle. | 2,8 | 2,8 |
| A3-1 | GewTle. | 0,50 | 0,50 |
| A3-15 | GewTle. | 0,60 | 0,60 |
| Kennzahl | | 75 | 75 |
| Isocyanat | | B-1 | B-1 |
| Mischungsverhältnis A: B [2] | GewTle. | 25,13 | 25,16 |
| Formteildichte | g/L | 40 | 40 |
| **Extraktion mit Essigsäure** | | | |
| 2,4-TDA | mg/kg Schaumstoff | 2,9 | 2,5 |
| 2,6-TDA | mg/kg Schaumstoff | 178 | 146 |
| \* nicht erfindungsgemäß | | | |

**Patentansprüche**

1.   Verfahren zur Herstellung von Polyurethanen, wobei die Komponenten

**A** enthaltend

**A1** Verbindungen mit gegenüber Isocyanaten reaktionsfähigen Wasserstoffatomen,
**A2** Treibmittel
und gegebenenfalls
**A3** Hilfs- und Zusatzstoffe wie

a) Katalysatoren,
b) oberflächenaktive Zusatzstoffe,
c) Pigmente und/oder Flammschutzmittel

und
**B** Di- und/oder Polyisocyanaten,
miteinander umgesetzt werden, **dadurch gekennzeichnet, dass** eine Verbindung **A1.1** enthaltend ist, die von Alkylenoxid und einer $\alpha,\beta$-ungesättigten Carbonsäure und/oder einem $\alpha,\beta$-ungesättigten Carbonsäurederivat abgeleitete Baueinheiten aufweist.

2. Verfahren gemäß Anspruch 1, **dadurch gekennzeichnet, dass** die Verbindung **A1.1** mindestens ein Polyetheresterpolyol oder Polyetherestercarbonatpolyol enthält.

3. Verfahren gemäß Anspruch 1 oder 2, wobei die Einsatzmenge der Verbindung **A1.1** 1 bis 200 mmol pro kg der Komponenten **A** und **B**, bevorzugt 5 bis 50 mmol pro kg der Komponenten **A** und **B** beträgt.

4. Verfahren zur Herstellung von Polyurethanen, bevorzugt Polyurethan-Schaumstoffen, wobei die Komponenten

**A** Verbindungen mit gegenüber Isocyanaten reaktionsfähigen Wasserstoffatomen, enthaltend

**A1.1** 0,5 bis 60 Gew.-Teile (bezogen auf die Summe der Gew.-Teile aller Komponenten **A** = 100 Gew.-Teile) gegenüber Isocyanaten reaktionsfähige Wasserstoffatome aufweisende Verbindungen die von Alkylenoxid und einer $\alpha,\beta$-ungesättigten Carbonsäure und/oder einem $\alpha,\beta$-ungesättigte Carbonsäurederivat abgeleitete Baueinheiten enthalten, bevorzugt mindestens ein Polyetheresterpolyol oder Polyetherestercarbonatpol yol,
**A1.2** 29,0 bis 98,5 Gew.-Teile (bezogen auf die Summe der Gew.-Teile aller Komponenten **A** = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 20 bis < 120 mg KOH/g,
**A1.3** 0 bis 60 Gew.-Teile (bezogen auf die Summe der Gew.-Teile aller Komponenten **A** = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 120 bis < 600 mg KOH/g,
**A1.4** 0 bis 10 Gew.-Teile (bezogen auf die Summe der Gew.-Teile aller Komponenten **A** = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 600 bis 4000 mg KOH/g,

**A2** Treibmittel, enthaltend

**A2.1** 0,1 bis 10 Gew.-Teile (bezogen auf die Summe der Gew.-Teile aller Komponenten **A** = 100 Gew.-Teile) chemische Treibmittel,
**A2.2** 0 bis 15 Gew.-Teile (bezogen auf die Summe der Gew.-Teile aller Komponenten **A** = 100 Gew.-Teile) physikalische Treibmittel,

**A3** 0,5 bis 15 Gew.-Teile (bezogen auf die Summe der Gew.-Teile aller Komponenten **A** = 100 Gew.-Teile) Hilfs- und Zusatzstoffe,
und
**B** Di- und/oder Polyisocyanaten,
miteinander umgesetzt werden.

5. Verfahren gemäß einem der Ansprüche 1 bis 4, **dadurch gekennzeichnet, dass** die Verbindung **A1.1** durch Anlagerung von Alkylenoxid, Maleinsäure und/oder Maleinsäureanhydrid und gegebenenfalls Kohlenstoffdioxid an ein Startermolekül in Anwesenheit eines DMC-Katalysators hergestellt ist.

6. Verfahren gemäß Anspruch 5, **dadurch gekennzeichnet, dass** das Startermolekül mindestens eine Verbindung ist, ausgewählt aus der Gruppe bestehend aus Ethylenglykol, Propylenglykol, 1,3-Butandiol, 1,4-Butandiol, 1,5-Pentendiol, 1,5-Pentandiol, 1,6-Hexandiol, 1,7-Heptandiol, 1,8-Octandiol, 1,10-Decandiol, 2-Methylpropan-1,3-diol, Neopentylglykol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Diethylenglykol, Dipropylenglykol, Glycerin, Trimethylolpropan, di- und trifunktionelle Polyetherpolyole.

7. Verfahren gemäß einem der Ansprüche 1 bis 6, **dadurch gekennzeichnet, dass** die Verbindung **A1** von Propylenoxid abgeleitete Baueinheiten enthält.

8. Verfahren gemäß einem der Ansprüche 1 bis 7, wobei die Verbindung A1.1 in einem Anteil von 0,5 bis 22 Gew.-Tle., bezogen auf die Summe der Gew.-Teile aller Komponenten **A** = 100 Gew.-Teile, vorliegt.

9. Verfahren gemäß einem der Ansprüche 1 bis 8, wobei als Di- und/oder PolyisocyanatKomponente (Komponente **B**) eine Diphenylmethandiisocyanat-Mischung, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,

verwendet wird.

10. Verfahren gemäß einem der Ansprüche 1 bis 9, wobei Komponente **A** mindestens eine der Verbindungen Ethanolamin oder Diethanolamin enthält.

11. Polyurethane, bevorzugt Polyurethanschaumstoffe, erhältlich nach einem Verfahren gemäß einem der Ansprüche 1 bis 10.

12. Polyurethane, bevorzugt Polyurethanschaumstoffe, gemäß Anspruch 12 mit einem Raumgewicht von 4 bis 600 kg/m³ (Polyurethanweichschaumstoff bzw. Halbhartschaumschaumstoff), bevorzugt 60 bis 120 kg/m³ (Polyurethanweichschaumstoff), bzw. bevorzugt 15 bis 55 kg/m³ (Halbhartschaumschaumstoff).

13. Verwendung der Polyurethane, bevorzugt Polyurethanschaumstoffe, gemäß Anspruch 11 oder 12 zur Herstellung von Möbelpolsterungen, Textileinlagen, Matratzen, Automobilsitzen, Kopfstützen, Armlehnen, Schwämmen, Dachhimmeln, Türseitenverkleidungen, Sitzauflagen oder Bauelementen.

14. Verwendung einer Verbindung **A1.1** enthaltend von Alkylenoxid und Maleinsäure abgeleitete Baueinheiten zur Verminderung des Gehaltes an Spurenstoffen und von Emissionen.

15. Verwendung gemäß Anspruch 14, **dadurch gekennzeichnet, dass** die Verbindung **A1.1** ein Polyetheresterpolyol oder Polyetherestercarbonatpolyol ist.

Europäisches Patentamt

European Patent Office

Office européen des brevets

## EUROPÄISCHER RECHERCHENBERICHT

**Nummer der Anmeldung**

EP 20 20 7610

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 00/66643 A1 (BASF AG [DE]; ARLT ANDREAS [DE] ET AL.) 9. November 2000 (2000-11-09) * Ansprüche 1-7 * ----- | 1-15 | INV. C08G18/48 C08G18/76 |
| X | EP 3 549 969 A1 (COVESTRO DEUTSCHLAND AG [DE]) 9. Oktober 2019 (2019-10-09) * Absatz [0110]; Ansprüche 1-15 * ----- | 1-15 | |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| München | 4. Mai 2021 | Scheuer, Sylvie |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 7610

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-05-2021

| Im Recherchenbericht angeführtes Patentdokument | Datum der Veröffentlichung | Mitglied(er) der Patentfamilie | Datum der Veröffentlichung |
|---|---|---|---|
| WO 0066643 A1 | 09-11-2000 | AT 309284 T | 15-11-2005 |
| | | AU 4748300 A | 17-11-2000 |
| | | DE 19919826 A1 | 02-11-2000 |
| | | DK 1187865 T3 | 30-01-2006 |
| | | EP 1187865 A1 | 20-03-2002 |
| | | ES 2252001 T3 | 16-05-2006 |
| | | WO 0066643 A1 | 09-11-2000 |
| EP 3549969 A1 | 09-10-2019 | CN 111989352 A | 24-11-2020 |
| | | EP 3549969 A1 | 09-10-2019 |
| | | EP 3774981 A1 | 17-02-2021 |
| | | US 2021070916 A1 | 11-03-2021 |
| | | WO 2019193101 A1 | 10-10-2019 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 19919826 A1
- WO 2013087582 A
- DE 19919826


**In der Beschreibung aufgeführte Nicht-Patentliteratur**

- **A. MARAND ; D. KARLSSON ; M. DALENE ; G. SKARPING.** *Analytica Chimica Acta,* 2004, vol. 510, 109-119
- **J. R. JOHNSON ; D. KARLSSON ; M. DALENE ; G. SKARPING.** *Analytica Chimica Acta,* 2010, vol. 678 (1), 117-123